# NEUE EUROPÄISCHE PATENTSCHRIFT

(11) **EP 1 327 119 B2**
(45) Veröffentlichungstag und Bekanntmachung des Hinweises auf die Entscheidung über den Einspruch: **12.06.2019**
(45) Hinweis auf die Patenterteilung: 16.07.2008
(21) Anmeldenummer: 01986760.5
(22) Anmeldetag: 10.10.2001
(51) Int. Cl.: G01D 3/08, G01D 18/00

(54) **POSITIONSMESSEINRICHTUNG UND VERFAHREN ZUM BETRIEB EINER POSITIONSMESSEINRICHTUNG**
POSITION MEASURING DEVICE AND A METHOD FOR OPERATING A POSITION MEASURING DEVICE
DISPOSITIF DE MESURE DE POSITION ET PROCEDE POUR FAIRE FONCTIONNER CE DISPOSITIF

(30) Priorität: 12.10.2000 DE 10050392
(43) Veröffentlichungstag der Anmeldung: 16.07.2003
(73) Patentinhaber: Dr. Johannes Heidenhain GmbH, 83292 Traunreut (DE)
(72) Erfinder: BRAASCH, Jan, 83352 Altenmarkt (DE); HOFBAUER, Hermann, 83308 Trostberg (DE); MITTMANN, Rudolf, 83342 Tacherting (DE); STRASSER, Erich, 83308 Trostberg (DE); TONFDORF, Sebastian, 83329 Waging am See (DE)
(74) Vertreter: Maikowski & Ninnemann Patentanwälte Partnerschaft mbB
(86) Internationale Anmeldenummer: PCT/EP2001/011688
(87) Internationale Veröffentlichungsnummer: WO 2002/031444

(56) Entgegenhaltungen:
- EP-A- 0 514 081
- EP-A- 0 660 209
- DE-A- 19 911 774
- DE-C1- 4 220 502
- PATENT ABSTRACTS OF JAPAN vol. 1996, no. 06, 28. Juni 1996 (1996-06-28) & JP 08 029197 A (MITSUTOYO CORP), 2. Februar 1996 (1996-02-02) in der Anmeldung erwähnt
- "Sincos - Die neue Dimension für Servomotoren" In: "Stegmann Antriebstechnik-Electronik, Sonderdruck aus Elektronik", 1994, Franzis-Verlag 16
- Stegmann: Übersichtskatalog, "Angular and positional measurement", September 1998 (1998-09)
- Stegmann: Produkrinformation, "Motorfeedback-Systeme für Servomotoren Sincos SCS-Kit 101", Dezember 1998 (1998-12)
- Elau AG: "Bericht und Protokoll vom 16-11-1999"
- Notiz Telefonat vom 03.07.1998
- Telefax Nr. V-980684 von Harmonic Drive vom 20.07.1998
- Besuchbericht Stegmann vom 17.07.1998
- Besuchbericht Stegmann vom 10.02.1999
- Lieferscheine und Rechnungen Stegmann
- "Motor mit Super-Feedback", KEM SONDERHEFT 2, Februar 1999
- ASYS Facsimile vom 05.05.2000
- E-Mail vom 22.03.2000/23.03.2000
- Hiperface - Parameter channel, ausgabe 2/99
- Schnittstellenadapter Schaltplan, 17.04.1997
- Kurz-Doku zum Programm RS-485.EXE, 17.09.1997
- Datenblatt zun Mikrocontroller C504, May 2000
- Besuchsbericht Harmonic Drive vom 12.10.1998
- Bildschirmausdruck zum Hilfsprogramm SCS-KIT.EXE, welches am 06.10.1998 im Haus Max Stegmann Herrn Buss von Harmonic Drive vorgeführt wurde
- Zwei Photos eines nachgestellten Versuchsaufbaus
- SinCos-KIT SCS-KIT 101

## Beschreibung

Die Erfindung betrifft eine Anordnung mit einer Positionsmesseinrichtung nach dem Oberbegriff des Anspruches 1 und ein Verfahren zum Betrieb einer Positionsmesseinrichtung nach dem Oberbegriff des Anspruches 3.

Bei Positionsmesseinrichtungen unterscheidet man zwischen inkrementalen und absoluten Positionsmesseinrichtungen. Bei inkrementalen Positionsmesseinrichtungen stehen am Ausgang zwei analoge oder rechteckförmige um 90° gegeneinander phasenverschobene Abtastsignale an, aus denen erst in einer Folgeelektronik ein Positionsmesswert gebildet wird. Bei absoluten Positionsmesseinrichtungen steht am Ausgang bereits ein absoluter Positionsmesswert an, welcher einer Folgeelektronik zuführbar ist.

Bei beiden Kategorien von Positionsmesseinrichtungen ist die Zuverlässigkeit und der Funktionszustand abhängig von der Qualität der Abtastsignale. Bei inkrementalen Positionsmesseinrichtungen, die analoge Abtastsignale ausgeben, kann die Qualität der Abtastsignale direkt geprüft werden, indem diese den beiden Kanälen eines Zweistrahl-Oszilloskops zugeführt werden, so dass am Bildschirm eine Lissajous-Figur erzeugt wird. Der Radius der Lissajous-Figur ist ein Maß für die Amplituden sowie die Phasenbeziehung beider Abtastsignale. Diese Maßnahme ist in der WO 90/02956 A1 und der JP 02036313 A beschrieben.

Bei inkrementalen Positionsmesseinrichtungen, die zwei um 90° gegeneinander phasenverschobene rechteckförmige Abtastsignale abgeben, ist eine Prüfung nicht direkt möglich. Gemäß der JP 08-029197 A wird vorgeschlagen, in der Positionsmesseinrichtung einen Umschalter vorzusehen, so dass auf zwei Datenleitungen entweder die rechteckförmigen oder die gegeneinander phasenverschobenen analogen Abtastsignale abgegeben werden können. Im Messbetrieb werden die rechteckförmigen Abtastsignale übertragen und zur Fehlerdiagnose die analogen Abtastsignale.

Gemäß der EP 0 962 748 A1 und der DE 199 11 774 A1 werden Zustandsinformationen der Positionsmesseinrichtung den inkrementalen rechteckförmigen Abtastsignalen analog überlagert übertragen. Dabei ist die Decodierung der überlagerten Signale relativ schwierig.

Absolute Positionsmesseinrichtungen sind in der DE 44 22 056 A1 und der DE 43 42 377 A1 beschrieben. Gemäß der DE 44 22 056 A1 werden mehrere gegeneinander phasenverschobene Abtastsignale einer periodischen Messteilung einem Zähler zur Erzeugung einer absoluten Position zugeführt. Diese absolute Position wird als mehrstelliges Codewort von der Positionsmesseinrichtung bitseriell auf einer Datenleitung zu einer Folgeelektronik übertragen. Zusätzlich sind in der Positionsmesseinrichtung Überwachungsschaltungen vorgesehen, die den Funktionszustand der Positionsmesseinrichtung erfassen und abhängig davon eine Anomalie-Information über die Datenleitung abgeben. Als Überwachungsmöglichkeit ist dabei die Temperatur und die Spannungsversorgung angegeben.

Gemäß der DE 43 42 377 A1 werden ebenfalls neben der absoluten Position auch Alarm- und Warnmeldungen seriell auf einer Datenleitung zu einer Folgeelektronik übertragen. Die Überwachung des Funktionszustandes erfolgt in der Positionsmesseinrichtung.

In der DE 42 20 502 C1 wird ein Drehwinkelmesssystem beschrieben, bei welchem mittels einer optoelektronischen Abtastung einer Codescheibe vier analoge Signalpaare, nämlich 1, 8, 64 und 512 Sinus- und Kosinus-Signale pro Umdrehung erhalten werden. Aus den Sinus- und Kosinus-Signalen wird in einer Auswerte-Elektronik der Arcustangens gebildet, der den Winkel darstellt. Die Winkel der einzelnen Signalpaare werden zu einem digitalen Wort aneinandergeführt, welches die absolute Winkelposition darstellt und welches über eine Schnittstelle in einem definierten Datenformat zur Verfügung steht.

Aufgabe der Erfindung ist es, eine Anordnung mit einer Positionsmesseinrichtung anzugeben, bei der einerseits am Ausgang der Positionsmesseinrichtung eine Positionsinformation ansteht und zusätzlich die Positionsmesseinrichtung auch Informationen zur Verfügung stellt, anhand derer mit einfachen Mitteln der Funktionszustand der Positionsmesseinrichtung prüfbar ist.

Diese Aufgabe wird durch eine Anordnung mit einer Positionsmesseinrichtung mit den Merkmalen des Anspruches 1 gelöst.

Die Vorteile dieser Anordnung umfassend eine Positionsmesseinrichtung liegen darin, dass Informationen über die Position und des Funktionszustandes auf einer gemeinsamen Datenleitung bzw. Datenkanal übertragbar sind. Weiterhin ist durch die ausschließlich digitale Übertragung eine hohe Störsicherheit gewährleistet und die Schnittstellenbausteine sind kostengünstig realisierbar.

Eine weitere Aufgabe der Erfindung ist es, ein Verfahren zum Betrieb einer Positionsmesseinrichtung anzugeben, mit dem von der Positionsmesseinrichtung Positionsmesswerte sowie Daten zu einer Folgeelektronik übertragbar sind, anhand derer eine Aussage über den Funktionszustand der Positionsmesseinrichtung gemacht werden kann.

Diese Aufgabe wird durch die Merkmale des Anspruches 3 gelöst.

Der große Vorteil dieses Verfahrens liegt darin, dass nur ein Datenkanal erforderlich ist, auf der die absolute Position sowie Daten über den Funktionszustand übertragbar sind. Die Auswertung der Daten, welche den Funktionszustand angeben, ist mit einfachen und üblichen Einrichtungen realisierbar. Sich ändernde Zustände der Positionsmesseinrichtung lassen sich erkennen, so dass rechtzeitig vor einem Funktionsausfall Gegenmaßnahmen getroffen werden können.

Vorteilhafte Ausgestaltungen der Erfindung sind anhand der Figuren näher erläutert. Es zeigt:
Figur 1 eine erfindungsgemäße Anordnung mit einer Positionsmesseinrichtung,
Figur 2 eine Diagnoseeinrichtung der Positionsmesseinrichtung und
Figur 3 ein Protokoll der Datenübertragung.

Die absolute Positionsmesseinrichtung 100 besteht in bekannter Weise beispielsweise aus einem Maßstab 1 mit mehreren Messteilungen 2, 3, 4. Die Messteilungen 2 und 3 sind periodische Teilungen unterschiedlicher Teilungsperiode und die Messteilung 4 ist eine unperiodische Teilung, auch Pseudo-Random Code genannt. Eine derartige Positionsmesseinrichtung ist in der DE 41 23 722 A1 beschrieben.

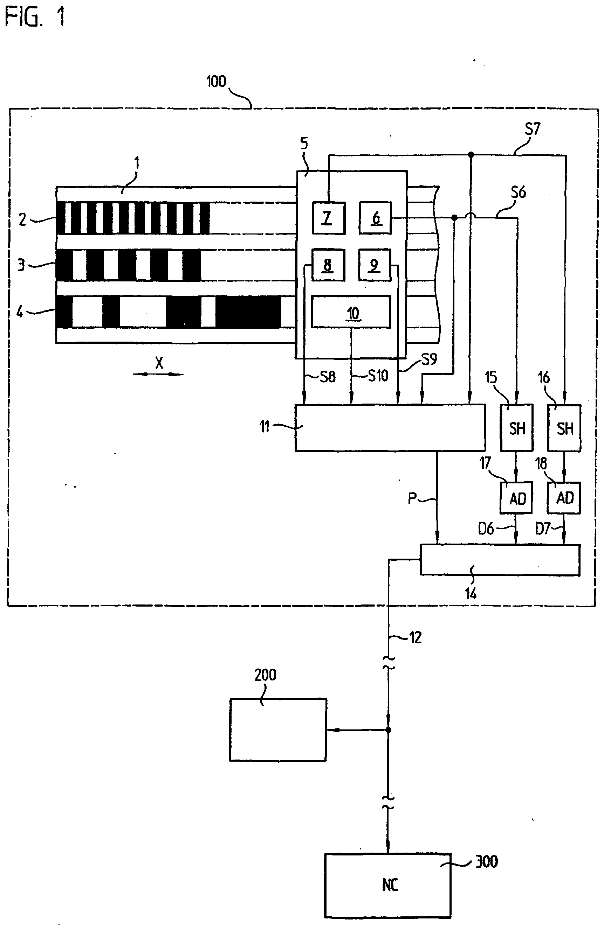

Die Messteilungen 2, 3, 4 werden von einem gemeinsamen Abtastkopf 5 abgetastet. Der Abtastkopf 5 enthält Abtastelemente 6 bis 10 zur Abtastung der Messteilungen 2 bis 4. Der feinsten periodischen Messteilung 2 sind die Abtastelemente 6 und 7 zugeordnet und erzeugen an ihrem Ausgang jeweils ein sinusförmiges analoges Abtastsignal S6, S7, wobei die Abtastsignale S6 und S7 eine Soll-Phasenverschiebung von 90° zueinander aufweisen. Die periodische Messteilung 3 wird ebenfalls von Abtastelementen 8, 9 zur Erzeugung von zwei um 90° gegeneinander phasenverschobenen Abtastsignalen S8 und S9 abgetastet. Die Messteilung 4 wird von einer Diodenzeile 10 abgetastet, wobei jedes Zeilenelement ein Ausgangssignal abgibt. In **Figur 1** ist für diese Abtastsignale S10 nur schematisch eine Leitung dargestellt.

Die Abtastsignale S6 bis S10 werden einem Baustein 11 zur Bildung einer absoluten Position P zugeführt. Der Baustein 11 kann eine Logikschaltung oder ein Mikroprozessor sein, in der/dem die Abtastsignale S6 bis S10 in bekannter Weise zu einer absoluten Position kombiniert werden, so dass am Ausgang ein den Positionsmesswert definierendes mehrstelliges digitales Codewort P ansteht. Dieses Codewort P wird auf einem Datenkanal 12 bitseriell zu einer Folgeelektronik, beispielsweise einer NC-Steuerung 300 übertragen. Hierzu ist ein Ausgabebaustein 14 - auch Schnittstellenbaustein oder Treiber genannt - vorgesehen. Die Positionsmesseinrichtung 100 ist vorzugsweise einem beweglichen Teil - insbesondere direkt einem elektrischen Antrieb - einer Werkzeugmaschine zugeordnet, und die Folgeelektronik ist eine NC-Steuerung 300.

Der Maßstab 1 kann alternativ auch nur mehrere periodische Messteilungen gemäß der DE 41 25 865 A1 aufweisen, wobei der Positionsmesswert durch logische Verknüpfung von Abtastsignalen aller periodischen Messteilungen gebildet wird. Der Maßstab 1 kann aber auch nur eine einzige periodische Messteilung gemäß der DE 44 22 056 A1 aufweisen, wobei die absolute Position durch richtungsabhängige Zählung von Impulsen, abgeleitet von mehreren gegeneinander phasenverschobenen Abtastsignalen, in der Positionsmesseinrichtung gebildet wird.

Erfindungsgemäß sind nun auf dem gleichen Datenkanal 12, auf der das Codewort P für die absolute Position übertragbar ist auch Amplitudenwerte der beiden Abtastsignale S6 und S7 in digitaler Form als mehrstellige Codeworte D6 und D7 übertragbar, insbesondere mit jeweils einer Bitbreite von mindestens 4 Bits, vorzugsweise aber mindestens 8 Bits. Hierzu werden jeweils zu gleichen Zeitpunkten die Momentanamplituden der analogen Abtastsignale S6 und S7 durch Sample-Hold-Glieder 15 und 16 übernommen. Diese übernommenen Analogwerte werden jeweils in amplitudenproportionale digitale Codeworte D6 und D7 umgesetzt, wozu in **Figur 1** schematisch Analog-Digital-Wandler 17 und 18 dargestellt sind. Die amplitudenproportionalen Codeworte D6 und D7 stehen am Ausgabebaustein 14 an, so dass diese ebenfalls seriell auf dem Datenkanal 12 übertragbar sind.

Durch diese Maßnahme stehen nun auf dem Datenkanal 12 die zur Ermittlung des Funktionszustandes der Positionsmesseinrichtung 100 erforderlichen Daten zur Verfügung. Es kann geprüft werden, ob die gegeneinander phasenverschobenen Abtastsignale S6 = SA6 * sin ωt und S7 = SA7 * cos ωt exakt um die Soll-Phasenlage Φ = 90° gegeneinander phasenverschoben sind, die geforderte Signalamplitude aufweisen und die Signalamplituden SA6, SA7 beider Abtastsignale S6, S7 gleich sind. Aufgrund dieser Parameter kann festgestellt werden, ob der Abtastabstand (Abstand zwischen Maßstab 1 und Abtastkopf 5) korrekt eingestellt ist, ob der Maßstab 1 verschmutzt ist, oder ob der Abtastkopf 5 gegenüber dem Maßstab verdreht ist (Moiré-Winkel).

Zur Auswertung und Darstellung des Funktionszustandes der Positionsmesseinrichtung 100 ist an den Datenkanal 12 eine Diagnoseeinrichtung 200 angeschlossen.

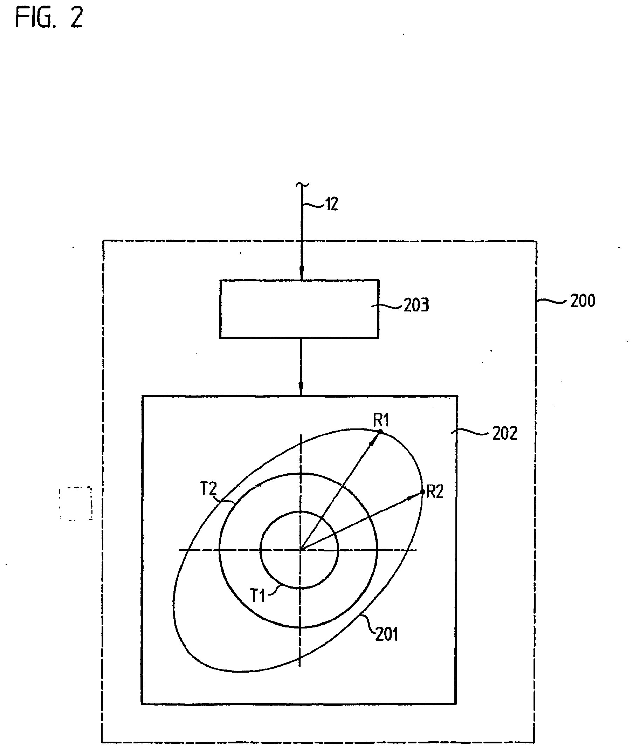

Aus jeweils einem zeitgleich übernommenen Wertepaar D6, D7 der Abtastsignale S6, S7 wird der Radius R = √S6²+S7² ermittelt. Aufeinanderfolgende Wertepaare ergeben eine Folge von Radiuswerten R, die eine Lissajous-Figur 201 bilden. Diese Lissajous-Figur 201, die sich als Folge nacheinander ermittelter Radius-Werte R ergibt, wird an einem Bildschirm 202 angezeigt. In **Figur 2** sind nur zwei Radius-Werte R1, R2 der Lissajous-Figur 201 eingezeichnet. Anstelle der Lissajous-Figur 201 ist auch eine Balkenanzeige gemäß der WO 90/02956 A1 oder der EP 0 836 080 A1 möglich.

Zur Anzeige der übernommenen Abtastsignale S6, S7 können die Codeworte D6, D7 bzw. die nachfolgend noch näher beschriebenen normierten Codewerte D6', D7' in der Diagnoseeinrichtung 200 digital-analog gewandelt werden und in bekannter Weise als Lissajous-Figur dargestellt werden. Diese Darstellung ist besonders vorteilhaft, da die Qualität der Abtastsignale S6, S7 den individuellen Anforderungen entsprechend beurteilt werden kann. Wird dies nicht in diesem Ausmaß gefordert, kann die Diagnoseeinrichtung 200 nur oder zusätzlich selbsttätig eine Bewertung vornehmen und entsprechend Warn- bzw. Alarmmeldungen ausgeben, wenn vorgegebene Kriterien der Abtastsignale S6, S7 nicht mehr erfüllt sind.

Um eine Beurteilung des Funktionszustandes besonders einfach durchführen zu können, ist in der Positionsmesseinrichtung 100 ein Sollwert N für die Amplituden SA6 bzw. SA7 abgespeichert. Dies hat den Vorteil, dass in der Positionsmesseinrichtung 100 eine geräteunabhängige Normierung der ausgegebenen Codeworte D6, D7 erfolgen kann, indem die Ist-Amplituden der Abtastsignale S6, S7 bzw. D6, D7 zu der Soll-Amplitude N direkt in Bezug gesetzt werden:
S6/N = S6'
S7/N = S7'

Auf dem Datenkanal 12 werden dann die normierten Amplitudenwerte S6' und S7' als amplitudenproportionale Codeworte D6', D7' übertragen. Die Diagnoseeinrichtung 200 kann dadurch für eine Vielzahl von unterschiedlichen Positionsmesseinrichtungen 100 gleichartig und geräteunabhängig ausgestaltet sein. Toleranzgrenzen T1, T2 können unabhängig von den gerätespezifischen absoluten Amplituden der Abtastsignale S6, S7 vorgegeben und angezeigt werden.

Alternativ dazu kann der in der Positionsmesseinrichtung abgespeicherte Sollwert N auch als digitaler Wert zur Diagnoseeinrichtung 200 übertragen werden und die Normierung in der Diagnoseeinrichtung 200 erfolgen.

Die vorgegebenen Toleranzgrenzen T1, T2 können ebenfalls in der Positionsmesseinrichtung 100 abgespeichert sein und als digitale Werte auf dem Datenkanal 12 zur Diagnoseeinrichtung 200 übertragen werden.

Die Diagnoseeinrichtung 200 kann auch integraler Bestandteil der NC-Steuerung 300 sein, wobei dann der Bildschirm 202 vorzugsweise der Bildschirm der NC-Steuerung ist.

Durch die digitale Datenübertragung ist eine sichere Übertragung gewährleistet, da auch die Übertragung der amplitudenproportionalen Codeworte D6, D7 mittels der Bildung und Übertragung eines CRC (cyclic redundance check) geprüft werden kann.

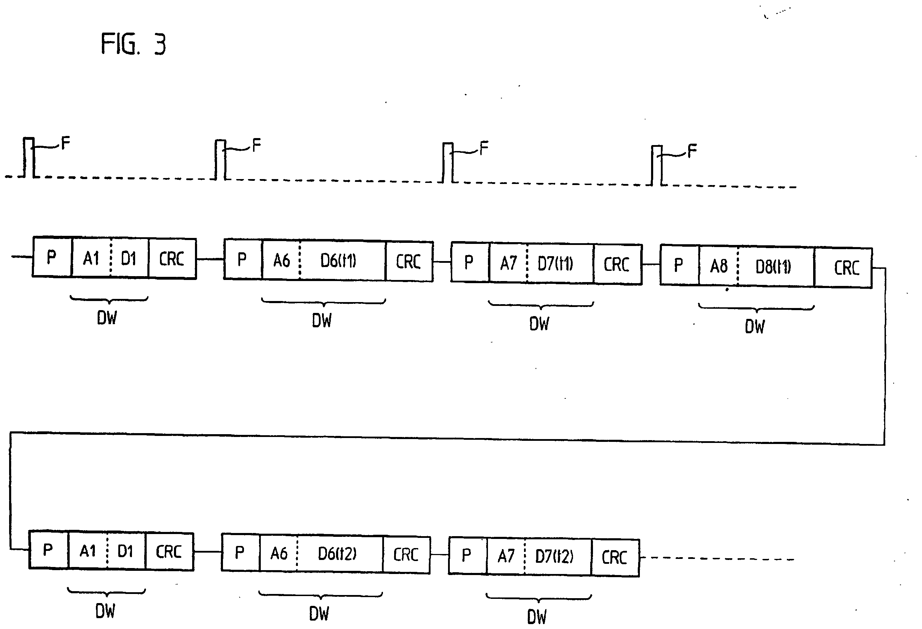

In **Figur 3** ist ein Protokoll der Signalübertragung schematisch dargestellt. Von der Folgeelektronik - NC-Steuerung 300 - wird mit einem Befehl F ein absoluter Positionsmesswert P angefordert. Diese Anforderung kann auf einer separaten Signalleitung oder auf dem bidirektional ausgeführten Datenkanal 12 erfolgen. Zur Synchronisation der Datenübertragung zwischen der Positionsmesseinrichtung 100 und der Folgeelektronik 300 wird vorteilhafterweise eine synchron-serielle Übertragung realisiert, wobei zwischen der Positionsmesseinrichtung 100 und der Folgeelektronik 300 in bekannter Weise eine nicht dargestellte Taktleitung zur Übertragung des Übertragungstaktes von der Folgeelektronik 300 zur Positionsmesseinrichtung 100 angeordnet ist.

Aufgrund dieses Anforderungsbefehls F sendet die Positionsmesseinrichtung 100 ein Datenpaket, bestehend aus einem Positionsmesswert als Codewort P und einer Diagnoseinformation DW. Die Diagnoseinformation DW setzt sich vorteilhafterweise aus einem Block, bestehend aus einer Adresse A und zugeordneten Daten D zusammen. Zur Erhöhung der Übertragungssicherheit wird aus dem Positionsmesswert P und der Diagnoseinformation DW eine Prüfinformation - auch CRC genannt - gebildet und im Datenpaket übertragen.

Im dargestellten Beispiel besteht die Diagnoseinformation DW nur aus einer Adresse A und zugeordneten Daten D. Das Datenpaket kann aber auch mehrere Adressen und/oder Daten beinhalten.

Eine Adresse A1 kann die Diagnosebetriebsart bestimmen, wobei die nachfolgenden Daten D1 ein Verzeichnis über den Inhalt und die Reihenfolge der im nachfolgenden Protokoll übertragenen Diagnoseinformation ist. Weitere Adressen kennzeichnen Diagnosewerte, so definiert die Adresse A6, dass nachfolgend der amplitudenproportionale Codewort D6 des Abtastsignals S6 übertragen wird.

Nach einer weiteren Anforderung F und Übertragung eines aktualisierten Positionsmesswertes P wird das amplitudenproportionale Codewort D7 des Abtastsignals S7 übertragen, das durch die Adresse A7 definiert ist. Die beiden Codeworte D6, D7 wurden von zeitgleich (Zeitpunkt t1) übernommenen Amplitudenwerten der beiden Abtastsignale S6, S7 abgeleitet.

Bei nachfolgenden Anforderungen F können zusätzlich zum Positionsmesswert P weitere Diagnosewerte wie Codewertanschlussqualität D8 als Bewertungszahl (ermittelt gemäß der EP 0 707 384 B1) oder Temperatur mit zugeordneten Adressen A8 übertragen werden. Sind alle einem Zeitpunkt t1 zugeordneten und zu einer aussagefähigen Diagnose erforderlichen Diagnosewerte übertragen, wird ein weiteres Wertepaar der Abtastsignale S6, S7 in Form von amplitudenproportionalen Codeworten D6, D7 in gleicher Form übertragen. Die dann übertragenen Codeworte D6, D7 werden ebenfalls von zeitgleich (zweiter Zeitpunkt t2) übernommenen Amplitudenwerten der beiden Abtastsignale S6, S7 abgeleitet.

Die Diagnoseinformation DW kann auch in Teilblöcken übertragen werden, beispielsweise mit einem ersten Positionsmesswert P die Adresse mit nur einem Teil des Codewortes D6 und mit einem zweiten Positionsmesswert P eine weitere Adresse mit dem Rest des Codewortes D6. Ebenso ist es möglich, dass mit einem Positionsmesswert P nur die Adresse und mit dem nächsten Positionsmesswert P die zugehörigen Daten übertragen werden.

Der Datenstrom von Diagnoseinformationen DW, welche zu einem gemeinsamen Zeitpunkt t1 oder t2 gehören, wird vorteilhafterweise durch eine Startinformation und eine Endinformation begrenzt. Diese Start- bzw. Endinformation ist im dargestellten Beispiel die Adresse A1 mit den Daten D1. Zwischen diesen Informationen DW sind die Daten D6 (t1), D7 (t1), D8 (t1), die zu einem gemeinsamen Zeitpunkt t1 erfasst und in der Positionsmesseinrichtung 100 abgespeichert wurden enthalten.

Die Datenübertragung auf dem Datenkanal 12 kann synchron-seriell oder asynchron erfolgen.

Das dargestellte Datenprotokoll hat den Vorteil, dass die Zustandskontrolle der Positionsmesseinrichtung 100 online, das heißt auch bei angeschlossener und in Betrieb befindlicher NC-Steuerung 300 möglich ist. Die Diagnoseeinrichtung 200 ist vor die NC-Steuerung 300 geschaltet und filtert aufgrund der Adressierung des ankommenden Datenstroms die Daten D6 und D7 zur Diagnose aus. Hierzu ist in **Figur 2** schematisch der Filter 203 dargestellt. Die zur Regelung der NC-Steuerung 300 erforderlichen Daten P gelangen zur NC-Steuerung 300. Die Diagnoseeinrichtung 200 hört also sozusagen nur mit.

Alternativ zur dargestellten Betriebsweise könnte die Positionsmesseinrichtung 100 in einer Betriebsweise nur absolute Positionsmesswerte P und in einer weiteren Betriebsweise nur Diagnosewerte mit den Wertepaaren der Abtastsignale D6, D7 bitseriell auf dem seriellen Datenkanal 12 übertragen. Die Positionsmesseinrichtung 100 kann somit zwischen Messbetrieb und Diagnosebetrieb umgeschaltet werden. Diese Umschaltung kann von der Diagnoseeinrichtung 200 oder der NC-Steuerung 300 über den bidirektional funktionsfähigen Datenkanal 12 erfolgen.

Besonders vorteilhaft ist es, wenn die Momentanwerte der Abtastsignale S6, S7 der Messteilung 2 mit der kleinsten Teilungsperiode zur Diagnose der Positionsmesseinrichtung 100 verwendet werden. Es ist aber auch möglich, die Momentanwerte anderer oder zusätzlich die Momentanwerte weiterer Messteilungsspuren 3 seriell auf dem Datenkanal 12 auszugeben.

Die zu überwachenden gegeneinander phasenverschobenen Abtastsignale S6, S7 müssen nicht zwingend von einer einzigen Messteilung 2 abgeleitet werden. Sie können auch aus zwei separaten Messteilungen stammen, die quer zur Messrichtung X voneinander beabstandet angeordnet sind. Der Sollwert der gegeneinander phasenverschobenen Abtastsignale S6, S7 ist nicht auf 90° beschränkt, so können beispielsweise auch amplitudenproportionale Codeworte von zwei oder drei um jeweils um 120° gegeneinander phasenverschobenen Abtastsignalen verwendet werden. Die Messteilungen können lichtelektrisch, magnetisch, induktiv oder kapazitiv abtastbar ausgebildet sein. Die Positionsmesseinrichtung kann zur linearen oder rotatorischen Positionsmessung ausgebildet sein.

## Patentansprüche

1. Anordnung, mit einer Positionsmesseinrichtung (100) mit
- Abtastelementen (6 bis 10), die zumindest einer relativ dazu beweglichen periodischen Messteilung (2, 3, 4) zugeordnet sind und diese abtasten;
- einem Baustein (11) zur Bildung eines Positionsmesswertes, wobei Abtastsignale (S6 bis S10) mehrerer Abtastelemente (6 bis 10) an diesem Baustein (11) anliegen und am Ausgang ein die Position definierendes Codewort (P) ansteht;
- einem Ausgabebaustein (14) zur digitalen Ausgabe des Codewortes (P) auf einem Datenkanal (12),
wobei an die Positionsmesseinrichtung (100) eine Folgeelektronik (300) angeschlossen ist, von der ein die Position definierendes Codewort (P) angefordert werden kann, woraufhin auf dem Datenkanal (12) das die Position definierende Codewort (P) übertragen wird,
**dadurch gekennzeichnet,**
**dass** die Positionsmesseinrichtung (100) eine Umsetzeinrichtung (17, 18) zur Umsetzung mehrerer gegeneinander phasenverschobener analoger Abtastsignale (S6, S7) von Abtastelementen (6, 7) zumindest einer periodischen Messteilung (2), in jeweils ein mehrstelliges amplitudenproportionales Codewort (D6, D6', D7, D7'), aufweist, wobei diese Codeworte (D6, D6', D7, D7') ebenfalls am Ausgabebaustein (14) zur Ausgabe auf dem genannten Datenkanal (12) anliegen und über den Ausgabebaustein (14) digital auf dem Datenkanal (12) übertragbar sind, wobei auf die Anforderung eines die Position definierenden Codewortes (P) durch die Folgeelektronik (300) zusätzlich zumindest ein Teil eines der amplitudenproportionalen Codeworte (D6, D7) auf dem Datenkanal (12) übertragen wird und wobei an den Datenkanal (12) eine Diagnoseeinrichtung (200) angeschlossen ist, die aufgrund der Adressierung des auf dem Datenkanal (12) ankommenden Datenstroms die amplitudenproportionalen Codeworte (D6, D7) zur Diagnose herausfiltert.

2. Anordnung nach Anspruch 1, **dadurch gekennzeichnet, dass** dem Ausgabebaustein (14) Speicher (15, 16) vorgeschaltet sind, in welchen ein zu einem Zeitpunkt (t1) übernommener Amplitudenwert eines der Abtastsignale (S6) und ein zum gleichen Zeitpunkt (t1) übernommener Amplitudenwert eines dazu phasenverschobenen Abtastsignals (S7) abgespeichert ist.

3. Verfahren zum Betrieb einer Positionsmesseinrichtung (100), bei dem zumindest eine periodische Messteilung (2) zur Erzeugung von positionsabhängigen Abtastsignalen (S6, S7) abgetastet wird und aus mehreren Abtastsignalen (S6 bis S10) ein Positionsmesswert gebildet wird, der als Codewort (P) auf einem Datenkanal (12) zu einer Folgeelektronik (300) übertragen wird, wobei das die Position definierende Codewort (P) von der Folgeelektronik (300) angefordert und daraufhin auf dem Datenkanal (12) übertragen wird,
**dadurch gekennzeichnet,**
**dass** mehrere gegeneinander phasenverschobene analoge Abtastsignale (S6, S7) in jeweils ein mehrstelliges amplitudenproportionales Codewort (D6, D6', D7, D7') umgesetzt werden und das die Position definierende Codewort (P) und die amplitudenproportionalen Codeworte (D6, D6', D7, D7') digital auf dem genannten Datenkanal (12) zur Folgeelektronik (300) übertragen werden, wobei auf die Anforderung eines die Position definierenden Codewortes (P) durch die Folgeelektronik (300) zusätzlich zumindest ein Teil eines der amplitudenproportionalen Codeworte (D6, D7) auf dem Datenkanal (12) übertragen wird und wobei eine Diagnoseeinrichtung (200) aufgrund der Adressierung des auf dem Datenkanal (12) ankommenden Datenstroms die amplitudenproportionalen Codeworte (D6, D7) zur Diagnose herausfiltert.

4. Verfahren nach Anspruch 3, **dadurch gekennzeichnet, dass** die amplitudenproportionalen Codeworte (D6, D7) aus zeitgleichen Momentanwerten zweier periodischer Abtastsignale S6 = SA6 * sin ωt und S7 = SA7 * cos ωt abgeleitet werden.

5. Verfahren nach Anspruch 3 oder 4, **dadurch gekennzeichnet, dass** die amplitudenproportionalen Codeworte (D6, D7) normiert werden, indem die Momentanwerte der Abtastsignale (S6, S7) mit einem in der Positionsmesseinrichtung (100) abgespeicherten Normfaktor in Bezug gesetzt werden.

6. Verfahren nach einem der Ansprüche 3 bis 5, **dadurch gekennzeichnet, dass** jedem amplitudenproportionalen Codewort (D6, D7) eine Adresse (A6, A7) zugeordnet ist, die ebenfalls auf dem Datenkanal (12) übertragen wird.

7. Verfahren nach einem der Ansprüche 3 bis 6, **dadurch gekennzeichnet, dass** die amplitudenproportionalen Codeworte (D6, D7) einer Diagnoseeinrichtung (200) zugeführt werden.

8. Verfahren nach Anspruch 7, **dadurch gekennzeichnet, dass** die Diagnoseeinrichtung (200) aus den amplitudenproportionalen Codeworten (D6, D7) Werte (R) für die Amplitudenhöhe und/oder die Phasenlage der Abtastsignale (S6, S7) bildet und anzeigt.

9. Verfahren nach einem der Ansprüche 3 bis 8, **dadurch gekennzeichnet, dass** die Codeworte (P, D6, D7) bitseriell auf einer einzigen Datenleitung (12) übertragen werden.

## Claims

1. Arrangement, having a position measuring device (100) having
- scanning elements (6 to 10) which are assigned to at least one periodic measuring division (2, 3, 4), which is moveable relative thereto, and scan the latter;
- a component (11) for forming a position measuring value, the scanning signals (S6 to S10) of a plurality of scanning elements (6 to 10) being present at this component (11) and a code word (P) which defines the position being present at the output;
- an output component (14) for digital output of the code word (P) on a data channel (12),
wherein sequential electronics (300) are connected to the position measuring device (100) from which a code word (P) defining the position can be requested, whereupon the code word (P) defining the position is transmitted on the data channel (12),
**characterized**
- **in that** the position measuring device (100) has a conversion device (17, 18) for converting a plurality of mutually phase-shifted analogue scanning signals (S6, S7) of scanning elements (6, 7) at least of one periodic measuring division (2) into respectively one multi-digit amplitude-proportional code word (D6, D6', D7, D7'), these code words (D6, D6', D7, D7') likewise being present at the output component (14) for output on the mentioned data channel (12) and being able to be transmitted digitally on the data channel (12) via the output component (14) wherein, in response to the request for a code word (P) defining the position, the sequential electronics (300) additionally transmit at least one part of one of the amplitude-proportional code words (D6, D7) on the data channel (12), and wherein a diagnostic device (200) is connected to the data channel (12) and, on the basis of the addressing of the data stream arriving on the data channel (12), filters out the amplitude-proportional code words (D6, D7) for diagnosis.

2. Arrangement according to Claim 1, **characterized in that** memories (15, 16), in which an amplitude value of one of the scanning signals (S6) which is received at a time (t1) and an amplitude value, which is received at the same time (t1), of a scanning signal (S7) which is phase-shifted relative thereto is stored, are connected before the output component (14).

3. Method for operating a position measuring device (100) in which at least one periodic measuring division (2) is scanned in order to produce position-dependent scanning signals (S6, S7) and a position measuring value is formed from a plurality of scanning signals (S6 to S10) and is transmitted as a code word (P) on a data channel (12) to sequential electronics (300), the code word (P) which defines the position being requested by the sequential electronics (300) and thereupon being transmitted on the data channel (12),
**characterized**
**in that** a plurality of mutually phase-shifted analogue scanning signals (S6, S7) are converted into respectively one multi-digit amplitude-proportional code word (D6, D6', D7, D7') and the code word (P) which defines the position and the amplitude-proportional code words (D6, D6', D7, D7') are transmitted digitally on the mentioned data channel (12) to the sequential electronics (300), wherein, in response to the request for a code word (P) defining the position, the sequential electronics (300) additionally transmit at least one part of one of the amplitude-proportional code words (D6, D7) on the data channel (12), and wherein, on the basis of the addressing of the data stream arriving on the data channel (12), a diagnostic device (200) filters out the amplitude-proportional code words (D6, D7) for diagnosis.

4. Method according to Claim 3, **characterized in that** the amplitude-proportional code words (D6, D7) are derived from synchronous momentary values of two periodic scanning signals S6 = SA6 * sin ωt and S7 = SA7 * cos ωt.

5. Method according to Claim 3 or 4, **characterized in that** the amplitude-proportional code words (D6, D7) are standardised **in that** the momentary values of the scanning signals (S6, S7) are set relative to a standard factor which is stored in the position measuring device (100).

6. Method according to one of Claims 3 to 5, **characterized in that** an address (A6, A7) is assigned to each amplitude-proportional code word (D6, D7) and is likewise transmitted on the data channel (12).

7. Method according to one of Claims 3 to 6, **characterized in that** the amplitude-proportional code words (D6, D7) are supplied to a diagnostic device (200).

8. Method according to Claim 7, **characterized in that** the diagnostic device (200) forms and displays values (R) for the amplitude level and/or the phase position of the scanning signals (S6, S7) from the amplitude-proportional code words (D6, D7).

9. Method according to one of Claims 3 to 8, **characterized in that** the code words (P, D6, D7) are transmitted on a single data line (12) in bit series.

## Revendications

1. Agencement, comprenant un dispositif de mesure de position (100) comprenant :
- des éléments d'exploration (6 à 10) qui sont associés au moins à une graduation de mesure (2, 3, 4) périodique mobile par rapport à ceux-ci et qui explorent cette dernière,
- un composant (11) pour donner une valeur de mesure de position, des signaux d'exploration (S6 à S10) de plusieurs éléments d'exploration (6 à 10) étant appliqués à ce composant (11) et un mot de code (P) définissant la position étant présent à la sortie,
- un composant de sortie (14) pour délivrer sous forme numérique le mot de code (P) sur un canal de données (12), une électronique séquentielle (300) étant raccordée au dispositif de mesure de position (100), par laquelle un mot de code (P) définissant la position peut être demandé, suite à quoi le mot de code (P) définissant la position peut être transféré au canal de données (12),
**caractérisé en ce que** le dispositif de mesure de position (100) comporte un dispositif de conversion (17, 18) pour convertir plusieurs signaux d'exploration (S6, S7) analogiques déphasés les uns par rapport aux autres, délivrés par des éléments d'exploration (6, 7) d'au moins une graduation de mesure (2) périodique, en chaque fois un mot de code (D6, D6', D7, D7') proportionnel à l'amplitude et comportant plus d'un chiffre, ces mots de code (D6, D6', D7, D7') étant appliqués également au composant de sortie (14) pour être délivrés sur ledit canal de données (12) et pouvant être transmis sous forme numérique au canal de données (12) par le composant de sortie (14), suite à la demande d'un mot de code (P) définissant la position par l'électronique séquentielle (300), au moins une partie de l'un des mots de code (D6, D7) proportionnels à l'amplitude étant en outre transmise au canal de données (12) et un dispositif de diagnostic (200) étant raccordé au canal de données (12), lequel extrait par filtrage, sur la base de l'adressage du flux de données arrivant sur le canal de données (12), les mots de code (D6, D7) proportionnels à l'amplitude en vue d'un diagnostic.

2. Arrangement selon la revendication 1, **caractérisé en ce qu'**en amont du composant de sortie (14) sont disposées des mémoires (15, 16) dans lesquelles sont enregistrées une valeur d'amplitude saisie à un instant donné (t1), d'un des signaux d'exploration (S6) et une valeur d'amplitude, saisie au même instant (t1), d'un signal d'exploration (S7) déphasé par rapport au premier.

3. Procédé pour faire fonctionner un dispositif de mesure de position (100) selon lequel au moins une graduation de mesure (2) périodique est explorée pour produire des signaux d'exploration (S6, S7) en fonction de la position et, à partir de plusieurs signaux d'exploration (S6 à S10) est formée une valeur de mesure de position qui est transmise en tant que mot de code (P) sur un canal de données (12) à une électronique séquentielle (300), le mot de code (P) définissant la position étant demandé par l'électronique séquentielle (300) et étant ensuite transmis au canal de données (12), **caractérisé en ce que** plusieurs signaux d'exploration (S6, S7) analogiques déphasés les uns par rapport aux autres sont transformés chaque fois en un mot de code (D6, D6', D7, D7') proportionnel à l'amplitude et comportant plus d'un chiffre, et le mot de code (P) définissant la position et les mots de code (D6, D6', D7, D7') proportionnels à l'amplitude étant transmis sous forme numérique sur ledit canal de données (12), à l'électronique séquentielle (300), dans lequel suite à la demande d'un mot de code (P) définissant la position par l'électronique séquentielle (300), au moins une partie de l'un des mots de code (D6, D7) proportionnels à l'amplitude étant en outre transmise au canal de données (12) et un dispositif de diagnostic (200), sur la base de l'adressage du flux de données arrivant sur le canal de données (12), extrayant par filtrage les mots de code (D6, D7) proportionnels à l'amplitude en vue d'un diagnostic.

4. Procédé selon la revendication 3, **caractérisé en ce que** les mots de code (D6, D7) proportionnels à l'amplitude sont déduits des valeurs instantanées simultanées de deux signaux d'exploration périodiques S6 = SA6 * sin ωt et S7 = SA7 * cos ωt.

5. Procédé selon la revendication 3 ou 4, **caractérisé en ce que** les mots de code (D6, D7) proportionnels à l'amplitude sont normalisés, les valeurs instantanées des signaux d'exploration (S6, S7) étant posées en référence à un facteur de normalisation enregistré dans le dispositif de mesure de position (100).

6. Procédé selon une des revendications 3 à 5, **caractérisé en ce qu'**à chaque mot de code (D6, D7) proportionnel à l'amplitude est affectée une adresse (A6, A7) qui est transmise également sur le canal de données (12).

7. Procédé selon une des revendications 3 à 6, **caractérisé en ce que** les mots de code (D6, D7) proportionnels à l'amplitude sont envoyés à un dispositif de diagnostic (200).

8. Procédé selon la revendication 7, **caractérisé en ce que** le dispositif de diagnostic (200) forme, à partir des mots de code (D6, D7) proportionnels à l'amplitude, des valeurs (R) pour la hauteur d'amplitude et/ou la position de phase des signaux d'exploration (S6, S7), et les affiche.

9. Procédé selon une des revendications 3 à 8, **caractérisé en ce que** les mots de code (P, D6, D7) sont transmis sous forme de séries de bits sur une seule ligne de données (12).
